# EUROPÄISCHE PATENTANMELDUNG

(11) **EP 2 624 033 A1**
(43) Veröffentlichungstag der Anmeldung: **07.08.2013**
(21) Anmeldenummer: 13165704.1
(22) Anmeldetag: 27.11.2009
(51) Int. Cl.: G02B 6/38, G02B 6/42

(54) **Sicherheitssystem für optischen Steckverbinder**

(30) Priorität: 01.12.2008 CH 18782008
(62) Teilanmeldung aus: 09767926.0
(71) Anmelder: Reichle & De-Massari AG, 8622 Wetzikon (CH)
(72) Erfinder: Eckstein, Oliver, 8633 Wolfhausen (CH); Eigenmann, Daniel, 8620 Wetzikon (CH)
(74) Vertreter: Daub, Thomas

(57) **Zusammenfassung**

Um ein optisches Steckverbindungssystem derart auszubilden, dass im Vergleich zum Stand der Technik zusätzliche Sicherheitsmerkmale vorhanden sind, ohne dass bei den Anforderungen an den Formfaktor Kompromisse gemacht würden, wird ein Duplex-Adapter oder -Adapterteil (1) für einen Duplex-Stecker einer optischen Steckverbindung vorgeschlagen, mit einem Gehäuse (2) und zwei nebeneinander liegenden Steckeröffnungen (3), in welche ein Duplex-Stecker einführbar ist, wobei zwischen den nebeneinander liegenden Steckeröffnungen eine Trennwand (2.1) angeordnet ist, und mit einem am Gehäuse befestigten oder befestigbaren, vom Gehäuse (2) proximal vorstehenden Rahmen (5), der die zwei Steckeröffnungen (3) einer Adapterseite umgibt und eine sich zwischen den Steckeröffnungen erstreckende Mittepartie (5.3) aufweist, wobei der Rahmen farblich und/oder mechanisch codiert ist.

## Beschreibung

Die Erfindung betrifft das Gebiet der optischen Steckverbinder und insbesondere Sicherheitssysteme für optische Steckverbindungen.

Unter den optischen Steckverbindern erfreuen sich Steckverbinder von Typ "LC" wachsender Popularität, insbesondere aufgrund des kleinen Formfaktors. Dieser kleine Formfaktor hat aber seinen Preis. Die Bauteile von LC-Steckverbindern sind sehr klein dimensioniert mit minimalen Wandstärken Wänden. Das ergibt erstens herstellungstechnische Herausforderungen. Zweitens besteht kaum Spielraum zum Zufügen von Elementen mit weiteren Funktionalitäten, bspw. Sicherheitselementen. Gerade solche werden aber immer wichtiger, sind doch die über optische Lichtwellenleiterverbindungen übertragenen Strahlungsleistungen inzwischen sehr groß und machen Sicherheitsmaßnahmen erforderlich, sowohl aus Personenschutz- und Haftungsgründen, als auch aus Gründen der Betriebssicherheit.

Es ist demnach eine Aufgabe der Erfindung, ein optisches Steckverbindungssystem derart auszubilden, dass im Vergleich zum Stand der Technik zusätzliche Sicherheitsmerkmale vorhanden sind, ohne dass bei den Anforderungen an den Formfaktor Kompromisse gemacht würden. Insbesondere sollen ein LC-Duplex-Adapter bzw. ein LC-Duplex-Adapterteil zur Verfügung gestellt werden, die zusätzliche Sicherheitsmerkmale aufweisen. Außerdem ist eine Aufgabe der Erfindung, einen herstellungstechnisch günstigeren LC-Duplex-Adapter zur Verfügung zu stellen.

Diese Aufgaben werden gelöst durch die Erfindung, wie sie in den Patentansprüchen definiert ist.

Gegenstand der Erfindung ist ein Duplex-Adapter oder ein Duplex-Adapterteil (ein solches kann auch zur Bildung eines 'Receptacles' dienen) für einen Duplex-Stecker, vom Typ "LC" oder einem anderen, ähnlichen Typ mit kleinem Formfaktor und vorzugsweise mit Einklinkmechanismus für den Stecker im Adapter/dem Adapterteil. Ein Duplex-Adapter weist zwei Paare von aufeinander ausgerichteten Steckeröffnungen auf, in die je ein von gegenüberliegenden Seiten eingeführter LC-Duplex-Stecker einführbar ist, derart, dass in den Steckern geführte Lichtwellenleiter miteinander in Kommunikationsverbindung stehen. Ein entsprechendes Adapterteil weist zwei nebeneinander liegende Steckeröffnungen auf und ist bspw. dafür vorgesehen, zusammen mit einem weiteren, identischen Adapterteil einen Adapter zu bilden, oder auch ggf. mit weiteren Komponenten ein Receptacle zum Ankoppeln an einen Transmitter, Receiver, Transceiver oder Repeater zu bilden. Zwischen den nebeneinander liegenden Steckeröffnungen ist, wie an sich bekannt, eine Trennwand angeordnet. Der Adapter bzw. das Adapterteil weist ein Adaptergehäuse und mindestens auf einer Seite einen außenseitig am Adaptergehäuse befestigten Rahmen auf, der beide Steckeröffnungen der betreffenden Seite umgibt und eine sich zwischen den Steckeröffnungen erstreckende Partie aufweist. Der Rahmen dient der zusätzlichen Sicherheit, indem er eine oder mehrere der folgenden Funktionen übernimmt:
- Mechanische Codierung: Der Rahmen kann charakteristische Merkmale (bspw. seitlich in die Steckeröffnung hineinragende oder proximal wegragende Vorsprünge und/oder Vertiefungen oder dergleichen) aufweisen, die mit entsprechenden Merkmalen des Steckers (insbesondere eines den Duplex-Stecker zusammenfügenden Clips) bewirken, dass ein von der Anwendung her passender Stecker einführbar ist, andere Stecker aber nicht.
- Farbliche Codierung: Der Rahmen kann eine vom Gehäuse verschiedene Farbe aufweisen, die für die Anwendung charakteristisch ist.

Auch wenn das Prinzip der mechanischen und/oder farblichen Codierung an sich längst bekannt ist (bspw. von EP 0 616 236), bieten Aspekte der Erfindung mit den auswechselbaren, kostengünstigen Codierrahmen eine sehr gute Lösung für die Codierung. Im Gegensatz zu Lösungen, bei denen die Codierung vom Adapter bzw. dem Adapterteil oder dem Stecker als Ganzen bewirkt wird, ist die hier vorgeschlagene Lösung auch in Bezug auf Lagerbestände und -kosten klar vorzuziehen, müssen doch nicht Vorräte von Adaptern verschiedener Codierungen vorhanden sein, sondern es reicht eine Adaptersorte.
- Schutzklappe: Eine besonders vorteilhafte Anwendung des Rahmens ist das Halten einer Strahlungsschutzklappe ("Laserschutzklappe"). In einem Adapterteil oder Adapter vom Typ LC ist aus Platzgründen das Befestigen einer Schutzklappe praktisch unmöglich. Solche sind aber aus Sicherheitsgründen mehr und mehr erwünscht. In einen Duplex-Adapter bzw. -adapterteil gemäß Ausführungsformen der Erfindung ist nun die Laserschutzklappe als elastisches, um eine proximale Endkante der Trennwand umgelegtes und in die Steckeröffnungen die Lichtleiterachsen abdeckend hineinragendes, metallisches Blech, bspw. aus Federstahl, ausgebildet, das durch den Rahmen gehalten wird. Das Blech kann bspw. im Querschnitt die Form eines "V" mit gegen außen zu einer Richtung senkrechten auf die Trennwand hin gebogenen Armen aufweisen, d.h. es kann zwei gebogene Blechabschnitte bilden, deren konvexe Seiten gegeneinander ragen.

Dadurch, dass gemäß dem hier vorgeschlagenen Ansatz die Schutzklappe durch den Rahmen gehalten wird, ergeben sich gewichtige Vorteile:
- Platzangebot: Die Schutzklappe kann solid befestigt werden, dass zusätzlicher (nicht vorhandener) Platz beansprucht würde. Die Schutzklappe muss lediglich zwischen der Trennwand und der Mittepartie (dem Zwischensteg) des Rahmens verlaufen, vorzugsweise mit beidseitig entlang der Trennwand von der Trennwand-Endkante nach innen (d.h. in distaler Richtung) verlaufenden Abschnitten.
- Fertigung: Die Schutzklappe kann als ein auf geeignete Weise geformtes Blech hergestellt werden, wobei die Herstellung separat vom Gehäuse erfolgen kann, d.h. es müssen bspw. keine Abschnitte des Blechs um Elemente des Gehäuses herum gebogen werden. Die Schutzklappe ist kostengünstig herstellbar und sogar nachrüstbar.
- Sicherheit: Die Schutzklappe - die auf mindestens einer Seite, vorzugsweise auf beiden Seiten (der eingehenden und der ausgehenden Seite) vorhanden ist - bietet eine verlässliche Personensicherheit, auch bei Fehlmanipulationen wie dem irrtümlichen Ausstecken einer Steckers bei laufendem Betrieb.

Der Rahmen und/oder ggf. die Laserschutzklappe kann nur einseitig am Adapter/dem Adapterteil vorhanden sein, oder er kann/sie können beidseitig angebracht sein (in der Regel auf der Patchseite).

Die in diesem Text verwendeten, die Orientierung betreffenden Begriffe "axial"/"Achse", "proximal", "distal" sind auf die Steckverbindung bezogen zu interpretieren. Die Achse entspricht der optischen Achse, entlang welcher im eingesteckten Zustand und im Betrieb das Licht geleitet wird. "Axial" heißt "parallel zur Achse". "Seitlich" oder "lateral" bezeichnen nicht-axiale Richtungen. In einer solchen Steckverbindung ist oft auch eine optische Ebene definiert; dabei handelt es sich um die senkrecht zur Achse verlaufende Ebene, die bei einer Stecker-Stecker-Verbindung im Betriebszustand in der Mitte zwischen den beiden Ferrulen der Stecker liegt, also quasi dort, wo das geführte Licht von einem Stecker zum anderen übergeben wird. "Distal" bezeichnet die Positionen "vorne" am Stecker und "innen" in der Steckeröffnung, also gegebenenfalls "zur optischen Ebene hin". "Proximal" heißt ggf. "von der optischen Ebene weg", also "hinten" am Stecker und "außen" an der Steckeröffnung. Auch die Begriffe "oben" und "unten" werden in diesem Text manchmal verwendet. Sie beziehen sich auf die Orientierung eines LC-Steckers/Adapters/Receptacles, in welcher die Betätigungsklinke oben liegt, sie sind selbstverständlich nicht so zu interpretieren, dass nur Systeme mit bestimmten Orientierungen im Einbau geschützt seien; vielmehr hängt die Erfindung nicht von der Orientierung ab, wie sie letztlich für den Betrieb gewählt wird.

Ein Duplex-Stecker, bspw. für eine LC-Steckverbindung, bspw. für einen Adapter/ein Receptacle der vorstehend beschriebenen Art, weist, wie an sich bekannt, nebst zwei Entriegelungsklinken (je einer für jede der beiden Steckerpartien des Duplex-Steckers) auch einen gemeinsamen Auslöser auf. Wenn der Duplex-Stecker aus zwei bspw. marktüblichen Simplex-Steckern aufgebaut ist, die durch einen Clip (Joch; "Duplex Yoke") miteinander verbunden sind, weist der Clip einen entsprechenden einteilig mit dem Clip ausgeformten Auslöser auf. Dieser ist als von der Steckerachse in distaler Richtung weg ragende, am distalen Ende beide Entriegelungsklinken überragende Klappe ausgebildet, siehe bspw. auch US 7,413,351, EP 0 788 002 und US 6,461,054.

Vorteilhaft wird eine Sicherungsvorrichtung zur Verfügung gestellt, die nebst dem Duplex-Stecker als Ganzem oder dem Clip auch einen entfernbaren Betätigungsschutz aufweist. Dieser besitzt eine formsteife Abdeckpartie und deckt den Auslöser zur proximalen Seite hin ab. Der Betätigungsschutz weist außerdem eine Führungspartie auf, welche zur Befestigung durch eine Öffnung im Auslöser zur distalen Seite des Duplex-Steckers hin ragt. Aufgrund der Abdeckpartie und/oder der eine Bewegung des Auslösers blockierenden Führungspartie kann der Auslöser nicht werkzeugfrei betätigt werden. Ebenso wird eine direkte werkzeugfreie Betätigung der Rastklingen verhindert. Die Führungspartie wird durch einen Rastmechanismus blockiert, so dass ein Entfernen des Bestätigungsschutzes verhindert wird. Um den Rastmechanismus zu lösen, muss ein Entriegelungswerkzeug mit einer charakteristischen Betätigungspartie in den Betätigungsschutz eingeführt werden. Bevorzugt ist das Entriegelungswerkzeug charakteristisch ausgeformt, in seiner Dimensionierung auf die Öffnung im Betätigungsschutz abgestimmt, und gehört ebenfalls zur Sicherungsvorrichtung. Im Prinzip wäre es als Alternative auch möglich, den Betätigungsschutz so auszugestalten, dass ein handelsübliches Werkzeug verwendet werden kann, bspw. eine Büroklammer.

Der Rastmechanismus kann bspw. eine federnde Rastlasche des Clips oder des Betätigungsschutzes aufweisen, die hinter einem Rastvorsprung des Betätigungsschutzes bzw. des Clips einrastet. Das Entriegelungswerkzeug wird bspw. die Rastlasche entgegen ihrer Federkraft bewegen, um die Rastverbindung zu lösen. Eine Öffnung im Betätigungsschutz zum Einführen des Entriegelungswerkzeuges kann - bezogen auf die laterale Position - im Innern der Öffnung im Auslöser sein, so dass das Entriegelungswerkzeug so einführbar ist, dass es ebenfalls durch den Auslöser hindurch zur distalen Seite hin ragt und den dort befindlichen Rastvorsprung betätigt.

Das Entriegelungswerkzeug kann außerdem Rückhaltestrukturen aufweisen, die mit entsprechenden Strukturen des Betätigungsschutzes zusammenwirken, so dass der Betätigungsschutz durch ein Ziehen in entgegengesetzter Richtung zur Steckrichtung am eingeführten Entriegelungswerkzeug entfernbar ist.

Die Sicherheitsfunktionen des Rahmens (vorzugsweise mit Laserschutzklappe) und des Betätigungsschutzes werden vorzugsweise als Gesamtkonzept integriert; an sich sind sie aber auch unabhängig voneinander implementierbar.

Ein Sicherungs-Set mit den integrierten Sicherheitsfunktionen des Rahmens und des Betätigungsschutzes weist nebst dem Duplex-Adapter und der Sicherungsvorrichtung vorzugsweise noch eine Mehrzahl weiterer Rahmen und Clips (oder eventuell von ganzen Duplex-Steckern) auf, wobei die Rahmen einerseits und die Clips andererseits vorzugsweise in ihrer Codierung aufeinander abgestimmt sind, d.h. es gibt bestimmte Arten von Rahmen, die nur mit bestimmten Clips zusammen zu verwenden und/oder verwendbar sind (und/oder umgekehrt).

Vorteilhaft weist der LC-Adapter - Simplex oder Duplex, mit oder ohne vorstehend diskutierten Rahmen - ein einstückiges Kunststoffgehäuse auf. Einstückige Kunststoffgehäuse sind im Bereich der Steckverbindungen an sich auch schon bekannt. Für LC-Adapter sind sie bisher jedoch kaum in Betracht gezogen worden. Der Grund dafür liegt insbesondere in der Fertigung der Aufnahme der Führungshülse (des sogenannten "Sleeve"). Die Führungshülse dient der Führung der Ferrulen der beiden zu verbindenden Stecker. Diese Aufnahme der Führungshülse muss selbstverständlich durch das Gehäuse gehalten bzw. gebildet sein, und sie muss der Führungshülse einen verlässlichen Sitz bieten, der sie insbesondere auch gegen axiale, durch Reibung der Ferrule an der Hülse beim Ein- und Ausführen in den Adapter verursachte axialen Kräfte sichert. Das Einführen der Führungshülse beinhaltete gemäß dem Stand der Technik, bspw. beschrieben in EP 0 768 547, das Einführen in eine Aufnahmehälfte der einen Anschlusshälfte und das anschließende Zusammenfügen der beiden den Adapter bildenden Anschlusshälften. Die beiden Aufnahmehälften konnten dann je einen die Führungshülse axial ganz fixierenden Führungskragen aufweisen. Bei einer Fertigung als einstückiges Gehäuse würde jedoch durch solche Führungskragen das Einführen der Führungshülse erschweren wenn nicht gar verunmöglicht.

Die US 7,318,751 zeigt zwar einen LC-Adapter mit einstückigem metallischem Gehäuse. Es wird jedoch für die Führungshülse eine eigens anzufertigende und zu befestigende Befestigungskappe benötigt, was die fertigungstechnischen Vorteile der Einstückigkeit mindestens zu einem großen Teil wieder zunichte macht. EP 1 199 587 zeigt einen Hybrid-Adapter mit einstückigem Gehäuse, bei dem aber keine praktikable Lösung des Problems des Einführens der Führungshülse aufgezeigt wird.

Vorteilhaft ist nun jedoch die Aufnahme für die Führungshülse am einstückigen Kunststoffgehäuse ausgeformt (d.h. sie bildet einen Bestandteil des Kunststoffgehäuses und ist einstückig mit diesem), und sie ist mindestens auf einer Seite mit einem Schnappmechanismus mit einem federnden, durch die Aufnahme selbst gebildeten Element zum verrastenden Befestigen der Führungshülse ausgebildet. So kann die Führungshülse durch das einstückige Gehäuse selbst gehalten werden, ohne zusätzliche Befestigungselemente. Beispielsweise kann die Aufnahme selbst, wie an sich bekannt, hülsenförmig ausgebildet sein, mit beidseitig gegen innen ragenden Kragen, wobei mindestens auf der einen Seite eine Mehrzahl von axial verlaufenden Schlitzen vorhanden ist, durch welche die entsprechende Seite der Aufnahme in Segmente unterteilt wird, die beim Einführen der Führungshülse federnd nach außen ausweichen können.

Nachfolgend werden Ausführungsformen der Erfindung anhand von Zeichnungen näher beschrieben. In den Zeichnungen bezeichnen gleiche Bezugszeichen gleiche oder analoge Elemente. Es zeigen:
- Figur 1 eine Ansicht eines Duplex-Adapters;
- Figur 2 eine Explosionsdarstellung von Elementen des Duplex-Adapters mit Sicherungsvorrichtungen gemäß Figur 1;
- Figur 3 einen Duplex-Stecker, wie er mit dem Duplex-Adapter zusammenwirken kann;
- Figur 4 einen Clip zum Bilden eines Duplex-Steckers der in Figur 3 dargestellten Art;
- Figur 5 einen ersten Codierrahmen für einen Duplex-Adapter der in Figur 1 dargestellten Art;
- Figur 6 einen zu Figur 4 alternativen, mechanischen codierten Clip;
- Figur 7 einen zu Figur 5 alternativen Codierrahmen zum Zusammenwirken mit dem Clip gemäß Figur 6;
- Figur 8 eine Explosionsdarstellung eines Duplex-Steckers mit Betätigungsschutz und Entriegelungswerkzeug;
- Figur 9 eine Unteransicht des Betätigungsschutzes;
- Figur 10 eine Ansicht des Betätigungsschutzes, welche entlang einer Ebene durch die Achse der Steckverbindung geschnitten ist;
- Figur 11 eine Ansicht des Entriegelungswerkzeugs;
- Figur 12 eine Darstellung des entlang einer Ebene geschnittenen Duplex-Steckers gemäß Figur 8 mit teilweise eingeführtem Entriegelungswerkzeug; und
- Figur 13 ein Detail des einteiligen Gehäuses des Adapters mit Aufnahme für die Führungshülse (Sleeve).

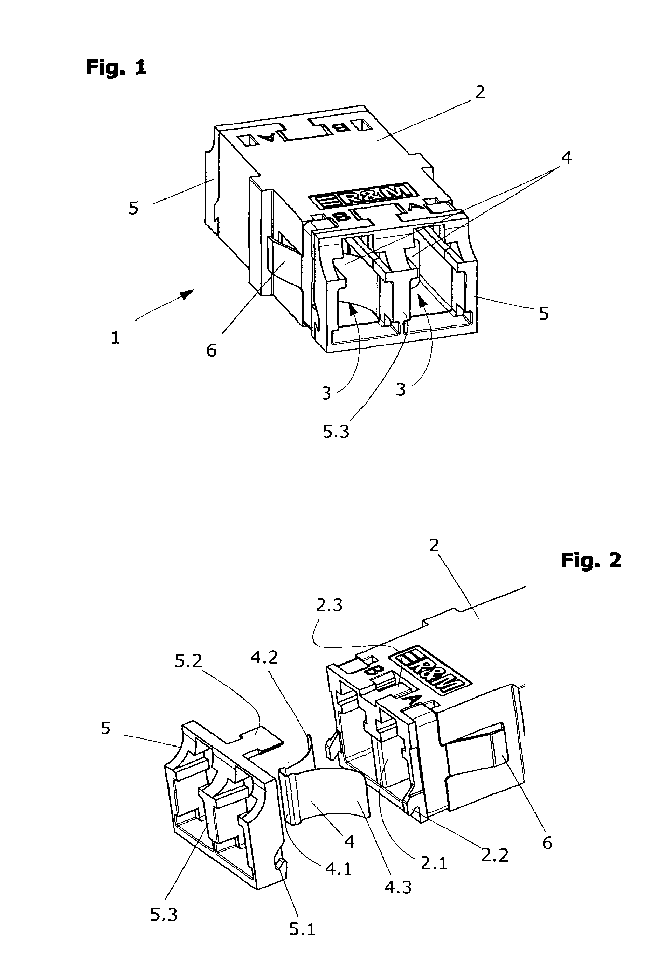

Der in **Figur 1** gezeichnete Duplex-Adapter 1 für Steckverbindungen vom Typ LC weist ein spritzgegossenes, in der dargestellten Ausführungsform einteiliges Kunststoffgehäuse 2 auf. Im Gehäuse 2 sind nebeneinander angeordnete Steckeröffnungen 3 ausgebildet, welche die Aufnahme von genormten Steckern bzw. eines genormten Duplex-Steckers vom Typ "LC" erlauben. Im Innern der Steckeröffnung ist eine Laserschutzklappe 4 vorhanden, die beim Einführen des Steckers entgegen einer Federkraft nachgibt und die Buchsenöffnung freigibt. Beim wieder Ausführen wird sich die Laserschutzklappe aufgrund der Federkraft wieder zurück in den abgebildeten, die Achse der lichtführenden Elemente abdeckenden Zustand zurückbewegen bevor der Stecker den Adapter verlässt. Außerdem ist ein an der Stirnseite (Endseite) angeclippter Rahmen 5 vorhanden, der den proximalen Abschluss des Adapters 1 bildet und an dem in der abgebildeten Ausführungsform auch die an sich bekannten charakteristischen oberseitigen konkaven Merkmale der LC-Adapterbuchsen ausgebildet sind. Der Rahmen umgibt beide Steckeröffnungen und weist eine sich zwischen den Steckeröffnungen erstreckende Mittepartie (Steg) 5.3 auf.

Wie man das in **Figur 2** noch deutlicher sieht, hat der Rahmen 5 unter anderem die Funktion, die Laserschutzklappe 4 mittels Anliegens der Mittepartie 5.3 zu fixieren. Die Laserschutzklappe 4 ist als gebogenes Blech, beispielsweise aus Federstahl, ausgebildet, wobei das Blech eine einzige Laserschutzklappe für beide Steckeröffnungen 3 bildet. Das die Laserschutzklappe bildende Blech ist um die Trennwand 2.1 zwischen den Steckeröffnungen 3 gelegt. Zu diesem Zweck hat das Blech nebst einer stirnseitig an der Trennwand 2.1 anliegenden Stegpartie 4.1 zwei davon abgeknickte Flügelpartien 4.2, 4.3, die je die Laserschutzklappenpartien für die beiden Steckeröffnungen bilden. Die Flügelpartien verlaufen an die Stegpartie angrenzend zunächst von dieser in distaler Richtung wegragend im Wesentlichen parallel zur Trennwand und dann in Funktion des Abstandes von der Stegpartie kontinuierlich zur Senkrechten zur Trennwand hin gekrümmt, so dass sie als Ganzes im horizontalen Querschnitt die Form eines V mit kontinuierlich nach außen gekrümmten Armen aufweist. (Man könnte auch Armen in der Form von Abschnitten einer Zykloide sprechen). Diese Form ist speziell vorteilhaft, denn sie stellt sicher, dass beim Einführen des Steckers und der damit einhergehenden Verformung des Blechs an jedem Ort die Spannungen einen gewissen Betrag nicht überschreiten, so dass im ganzen Bereich eine im Wesentlichen elastische Verformung stattfindet. Würde das Blech hingegen bspw. anschließend an die Stegpartie senkrecht oder in einem großen Winkel von der Trennwand wegragen, würden sich im Bereich des Übergangs zur Stegpartie hingegen bei einer Verformung sehr große Spannungen ergeben, so dass bei mehrmaligen Stecken und Ausstecken eine rein elastische Verformung nicht mehr gegeben wäre. Ein weiterer Vorteil dieser Form ist, dass austretende Laserstrahlen durch die Reflexion nicht in die Faser/den Stecker zurückgekoppelt werden.

Die beschriebene Form der Laserschutzklappe 4 hat außerdem aufgrund der anschließend an die Stegpartie parallel zur Trennwand 2.1 verlaufenden Abschnitte den weiteren Vorteil, dass die Orientierung der Laserschutzklappe auch dann definiert ist, wenn der Rahmen 5 wie im hier beschriebenen Ausführungsbeispiel im Bereich der Mittepartie 5.3 zur distalen Seite hin flach ist, also lediglich an der Stegpartie 4.1 der Laserschutzklappe anliegt.

Für die Fixierung des Rahmens 5 am Gehäuse 2 sind Rastmittel vorhanden, die als entsprechende Ausformungen 2.2, 2.3; 5.1, 5.2 am Gehäuse und am Rahmen ausgebildet sind, deren genaue Form nicht erfindungswesentlich ist, und die daher hier nicht genauer beschrieben wird.

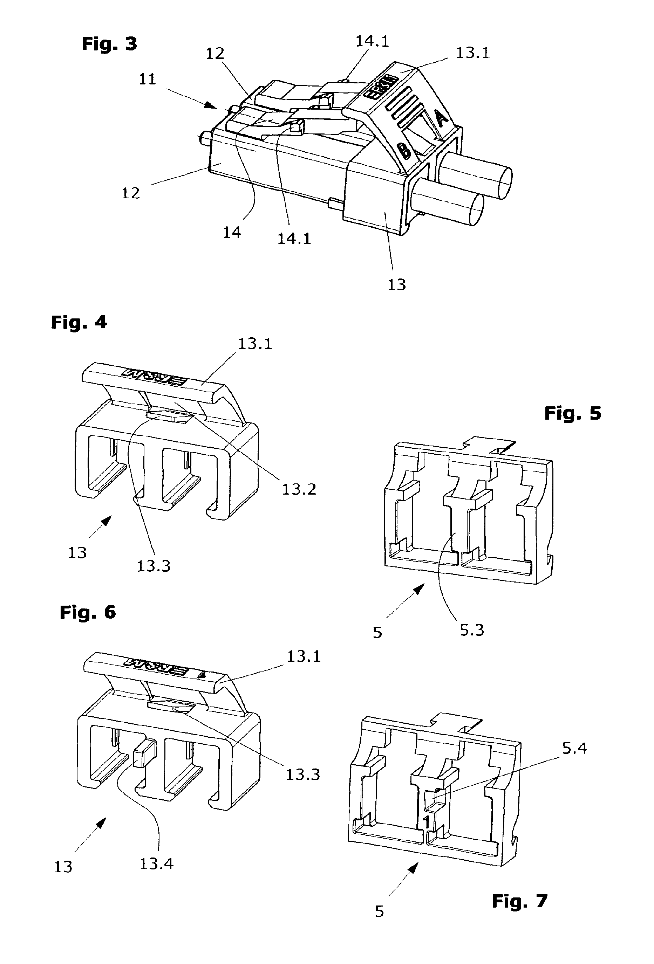

**Figur 3** zeigt einen Duplex-Stecker 11, wie er mit dem Adapter gemäß Figuren 1 und 2 verwendet werden kann. Der Duplex-Stecker 11 ist, wie an sich bekannt, aus zwei handelsüblichen Simplex-Steckern 12 zusammengesetzt, die durch einen Clip 13 verbunden sind. Die Simplex-Stecker 12 weisen Entriegelungsklinken 14 auf, die beim Einschieben in den Adapter eine Verrastung bewirken und durch deren Betätigung die Adapter-Stecker-Verbindung wieder entriegelt werden kann. Die bei der Verrastung hinter entsprechenden Strukturen des Adapters einrastenden Strukturen der Entriegelungsklinken 14 sind in der Figur mit 14.1 bezeichnet. Der Clip weist einen einteilig mit dem Clip ausgeformten Auslöser 13.1 auf. Dieser ist als mit dem Rest des Clips einstückige, beide Entriegelungsklinken überragende Klappe ausgebildet. Durch eine Betätigung des Auslösers werden beide Entriegelungsklinken 14 gleichzeitig betätigt.

**Figur 4** zeigt den Clip 13 in einer anderen Darstellung. Im Auslöser 13.1 ist eine Öffnung 13.2 ausgebildet, und im Bereich der Öffnung setzt außerdem eine federnde Rastlasche 13.3 an. Die Funktionen der Öffnung und der Rastlasche werden nachstehend noch eingehend beschrieben.

Der Rahmen 5 wirkt nebst den bereits erwähnten Funktionen auch als Codierrahmen. Das bedeutet, dass der Rahmen einerseits durch die Farbwahl eine Eignung der Steckverbindung für gewisse Anwendungen signalisieren kann, und bspw. anzeigt, dass nur Stecker mit einem farblich passenden Clip aufsetzbar sind. Zusätzlich oder als Alternative kann der Rahmen auch mechanische Merkmale aufweisen, die mit entsprechenden mechanischen Merkmalen des Duplex-Steckers, insbesondere des Clips, zusammenwirken, so dass nur passende Stecker einsteckbar sind - und/oder Stecker nur in passende Adapter einsteckbar sind. **Figur 5** zeigt einen Rahmen 5 der Codierung "neutral", welcher zu einem Clip 13 der in Figur 4 gezeichneten Art passt. **Figuren 6 und 7** zeigen einen Clip 13 bzw. einen Rahmen 5 mit einer davon verschiedenen Codierung, die durch einen Vorsprung 13.4 am Clip bzw. eine entsprechende Vertiefung 5.4 am Rahmen 5 bewirkt wird. Ein Duplex-Stecker mit dem Clip 13 gemäß Figur 6 kann nicht in einen Adapter mit dem Rahmen gemäß Figur 5 eingesteckt werden. Viele weitere Codierungen sind möglich. Die Ausgestaltung der mechanischen Codierung zwischen Rahmen 5 und Clip 13 kann auch invers zur zuvor beschriebenen Art ausgeführt sein, d.h. mit Codierungsvorsprung am Rahmen und entsprechender Vertiefung im Clip.

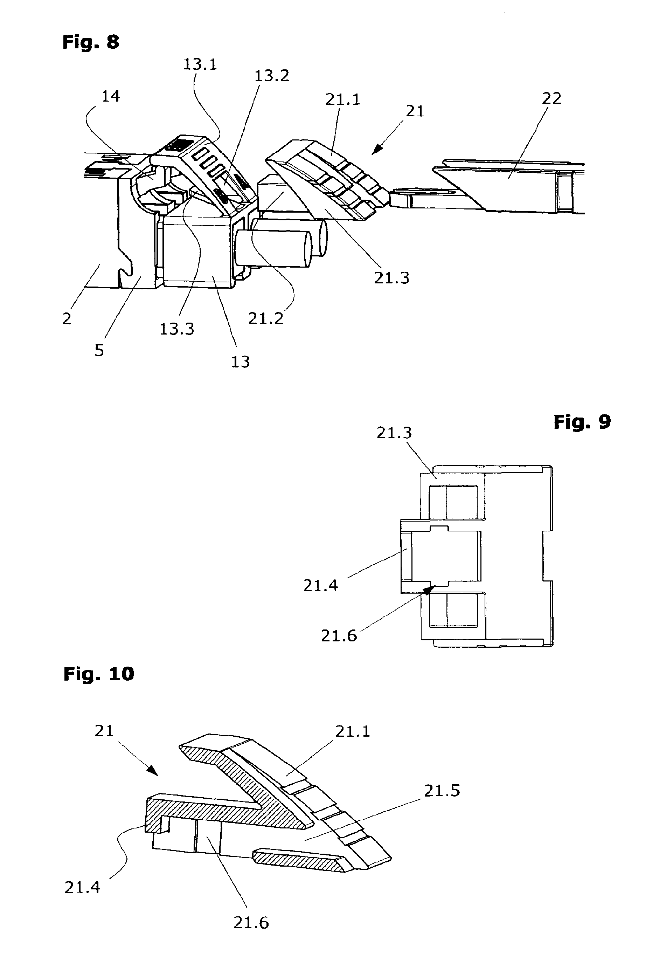

**Figur 8** stellt eine Anordnung mit Betätigungsschutz dar. Figur 8 zeigt den Duplex-Stecker 11 aus Figur 3 in den Adapter 2 eingesteckt. Zusätzlich ist ein Betätigungsschutz 21 sichtbar, der auch in **Figuren 9** - in einer anderen Ansicht - **und 10** (teilweise geschnitten) dargestellt ist.

Der Betätigungsschutz weist eine formsteife Abdeckpartie 21.1 und eine Führungspartie 21.2 auf. Im dargestellten Ausführungsbeispiel wird die Steifheit der Abdeckpartie durch seitliche Verstärkungen 21.3 unterstützt. Die Führungspartie kann in die Öffnung 13.2 eingeführt werden, bis der Betätigungsschutz an einem Anschlag ansteht. In dieser deckt die Abdeckpartie 21.1 den Auslöser 13.1 zur proximalen Seite hin ab - der Auslöser ist nicht mehr zugänglich und kann nicht werkzeugfrei, d.h. von Hand und ohne Manipulationsabsicht, betätigt werden. Außerdem rastet die Rastlasche 13.3, die beim Einführen des Abdeckschutzes nach unten gedrückt wird, hinter der Querwand 21.4 ein und sichert den Betätigungsschutz gegen ein Ausziehen. Auch der Betätigungsschutz kann nicht werkzeugfrei entfernt werden.

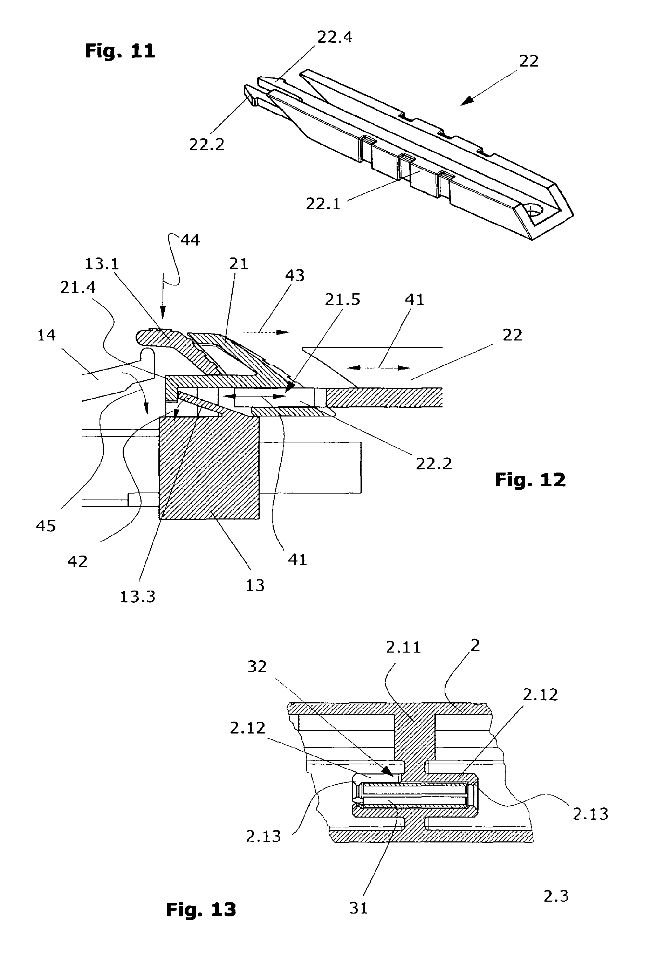

Zum Lösen der Rastverbindung wird ein Entriegelungswerkzeug 22 benötigt, wie es in Figur 8 und in **Figur 11** dargestellt ist. Das Entriegelungswerkzeug weist neben einer Handgriffpartie 22.1 auch eine Betätigungspartie 22.2 auf, die durch die Öffnung 21.5 (s. Fig. 10) im Auslöser in den Hohlraum geführt wird, welcher hinter der Querwand 21.4 zwischen dem Betätigungsschutz 21 und dem Clip 13 besteht, und in welchem sich die Rastlasche 13.3 befindet. Durch das Einführen wird die Rastlasche nach unten abgelenkt und gibt den Betätigungsschutz für ein Entfernen durch Zug zur proximalen Richtung hin frei. Die Betätigungspartie 22.2 des Entriegelungswerkzeugs weist außerdem Rückhaltestrukturen 22.4 auf, die ein Verrasten des Entriegelungswerkzeuges mit dem Betätigungsschutz bewirken, so dass dieser durch Zug am Entriegelungswerkzeug entfernbar ist. Die Rückhaltestrukturen 22.4 sind im dargestellten Ausführungsbeispiel als Rückhaltenasen ausgebildet, die vorderseitig an federnden, die Betätigungspartie bildenden Schenkeln angebracht sind und in einer Aufweitung 21.6 im Betätigungsschutz einrasten.

**Figur 12** zeigt das vorstehend beschriebene Ablenken der Rastlasche 13.3 durch das Entriegelungswerkzeug 22. Der Entriegelungsvorgang sieht zunächst das Einschieben des Entriegelungswerkzeugs 22 in die Öffnung 21.5 bis an einen Anschlag vor (Pfeile 41). Dadurch wird die Rastlasche 13.3 nach unten gedrückt (Pfeil 42) und gibt den Betätigungsschutz 21 zum Entfernen frei (Pfeil 43), bspw. durch Zug am Entriegelungswerkzeug 22, das mit dem Betätigungsschutz verrastet ist. Daran anschließend kann der Auslöser 13.1 betätigt werden (Pfeil 44), was ein Auslösen der Rastklinke 14 (Pfeil 45) bewirkt.

Wie man ebenfalls in Fig. 12 sieht, erfolgt hier die Blockierung des Auslösers 13.1 entweder durch das Abdecken und Unzugänglichmachen durch den Betätigungsschutz 21 oder durch ein Blockieren einer Schwenkbewegung durch ein Anliegen der Führungspartie an der Begrenzung der Öffnung 13.2 oder durch beide diese Mittel, wie in der Figur dargestellt.

Der vorstehend diskutierte Aspekt der Erfindung wurde anhand eines Duplex-Steckers diskutiert, der durch zwei anfänglich separate, durch einen Clip (13) zusammengehaltene Simplex-Stecker (12) gebildet wird. Die Erfindung lässt sich aber ebenso gut mit Duplex-Steckern ausführen, deren zwei Steckergehäuse miteinander einstückig sind oder die sonst wie aneinander befestigt sind, wobei dann der Auslöser durch das gemeinsame Gehäuse gebildet werden kann.

Die vorstehenden Figuren beschreiben die Erfindung anhand eines einstückigen Adapters. Ein entsprechendes Adapterteil (nicht gezeichnet) entspricht bspw. im Wesentlichen einer Hälfte des in Figur 1 gezeichneten Adapters, mit den in den nachfolgenden Figuren gezeichneten Merkmalen. Es kann auch als sog. 'Receptacle' ausgeführt sein und so bspw. zur Ankopplung an einen Transmitter, Receiver, Transceiver oder Repeater dienen.

**Figur 13** zeigt ein Detail der Aufnahme der Führungshülse 31 (des 'Sleeves'), die durch das vorzugsweise einstückige Kunststoffgehäuse 2 gebildet wird. Die Aufnahme durchdringt die ungefähr in der Mitte, bezogen auf die axiale Richtung, angeordnete Basiswand 2.11. Die Basiswand liegt bspw. ungefähr auf der optischen Ebene. Die Aufnahme 2.12 ist selbst hülsenartig ausgebildet, mit einem dem Außendurchmesser der Führungshülse 31 angepassten inneren Durchmesser. Sie weist beidseitig je einen Kragen 2.13 auf, der die Führungshülse gegen axiale Verschiebungen sichert. Mindestens auf einer Seite ist die Aufnahme mehrfach geschlitzt (dargestellt in ein Schlitz 32), so dass sie in eine Mehrzahl von axial verlaufenden Segmenten unterteilt wird, die beim Einführen der Führungshülse - von der geschlitzten Seite her - federnd nach außen ausweichen können.

Das hier beschriebene Konzept der Einstückigkeit ist ohne weiteres auch auf Simplex-Adapter und auf Stecker anderer Typen als des Typs LC übertragbar.

## Patentansprüche

1. Duplex-Adapter oder -Adapterteil (1) für einen Duplex-Stecker einer optischen Steckverbindung, mit einem Gehäuse (2) und zwei nebeneinander liegenden Steckeröffnungen (3), in welche ein Duplex-Stecker einführbar ist, wobei zwischen den nebeneinander liegenden Steckeröffnungen eine Trennwand (2.1) angeordnet ist, und mit einem am Gehäuse befestigten oder befestigbaren, vom Gehäuse (2) proximal vorstehenden Rahmen (5), der die zwei Steckeröffnungen (3) einer Adapterseite umgibt und eine sich zwischen den Steckeröffnungen erstreckende Mittepartie (5.3) aufweist, wobei der Rahmen farblich und/oder mechanisch codiert ist.

2. Duplex-Adapter oder -Adapterteil (1) nach Anspruch 1, **gekennzeichnet durch** eine Strahlungsschutzklappe (4), welche ins Innere der Steckeröffnung ragt, in Abwesenheit eines eingesteckten Steckers in einer ersten Position eine optische Achse der betreffenden Steckeröffnungen abdeckt und **durch** Einführen des Steckers entgegen einer Federkraft aus der ersten Position auslenkbar ist, wobei die Strahlenschutzklappe (4) **durch** den Rahmen (5) am Gehäuse (2) fixiert wird.

3. Duplex-Adapter oder -Adapterteil (1) nach Anspruch 2, **dadurch gekennzeichnet, dass** die Strahlungsschutzklappe (4) einstückig aus einem elastisch verformbaren Metallblech gefertigt ist, das zwei Flügel (4.2, 4.3) aufweist, die je die optische Achse der ersten und der zweiten der nebeneinander liegenden Steckeröffnungen (3) abdecken.

4. Duplex-Adapter oder -Adapterteil (1) nach Anspruch 3, **dadurch gekennzeichnet, dass** die Strahlungsschutzklappe eine zwischen der Trennwand (2.1) und der Mittepartie (5.3) des Rahmens verlaufende Stegpartie (4.1) aufweist, von welcher aus beidseitig je einer der beiden Flügel in die erste und die zweite Steckeröffnung hinein ragt, wobei jeder der Flügel im Anschluss an die Stegpartie zunächst in distaler Richtung verläuft und anschließend kontinuierlich zur Senkrechten auf die Trennwand (2.1) hin gebogen ist.

5. Duplex-Adapter nach einem der vorhergehenden Ansprüche, aufweisend zwei Paare von aufeinander ausgerichteten Steckeröffnungen, in welche je von gegenüberliegenden Seiten ein Duplex-Stecker einführbar ist, **dadurch gekennzeichnet, dass** das Gehäuse einstückig ist und die insgesamt vier paarweise zueinander ausgerichteten Steckeröffnungen (3) ausformt, wobei der Duplex-Adapter außerdem zwei Führungshülsen zum Führen und aufeinander Ausrichten von Steckerferrulen aufweist, wobei das Gehäuse pro Paar von zueinander ausgerichteten Steckeröffnungen eine Aufnahme (2.12) für eine der Führungshülsen (31) bildet, wobei die Aufnahme hülsenförmig mit beidseitig endseitig je einem radial nach innen ragenden Kragen (2.13) ausgebildet ist, und wobei die Aufnahme auf mindestens einer Seite eine Mehrzahl von axial verlaufenden Schlitzen (32) aufweist.
